# EUROPÄISCHE PATENTANMELDUNG

(11) **EP 2 928 060 A1**
(43) Veröffentlichungstag der Anmeldung: **07.10.2015**
(21) Anmeldenummer: 14001182.6
(22) Anmeldetag: 31.03.2014
(51) Int. Cl.: H02M 7/483

(54) **Modulare Stromrichterschaltung mit Submodulen, die unterschiedliches Schaltvermögen aufweisen**

(71) Anmelder: Siemens Aktiengesellschaft, 80333 München (DE); Fraunhofer-Gesellschaft zur Förderung der angewandten Forschung e.V., 80686 München (DE)
(72) Erfinder: Friedrich, Christian, 66839 Schmelz/Hüttersdorf (DE); Malipaard, Dirk, 90461 Nürnberg (DE); Schulze, Paul, 08523 Plauen (DE)

(57) **Zusammenfassung**

Die Erfindung betrifft eine Stromrichterschaltung (1) aufweisend
- einen Gleichspannungsanschluss (13),
- mindestens einen wechselspannungsseitigen Anschluss (12) und
- mindestens ein Phasenmodul (10),
wobei das Phasenmodul (10) eine Reihenschaltung von einem oberen und einem unteren Stromrichterventil (11a, 11b) aufweist,
wobei eine elektrische Verbindung zwischen dem oberen und dem unteren Stromrichterventil (11a, 11b) den wechselspannungsseitigen Anschluss (12) darstellt,
wobei Anschlüsse (14a, 14b) des Phasenmoduls (10) mit dem Gleichspannungsanschluss (13) elektrisch verbunden sind, wobei das obere und das untere Stromrichterventil (11a, 11b) jeweils wenigstens zwei Submodule (20, 30) aufweisen, die elektrisch in Reihe angeordnet sind,
wobei die Submodule (20, 30) mindestens einen Kondensator (42) und mindestens einen Leistungshalbleiter (41) aufweisen, wobei mindestens ein Stromrichterventil (11a, 11b) mindestens ein schnellschaltendes Submodul (30) aufweist,
wobei die Leistungshalbleiter (41) des schnellschaltenden Submoduls (30) für einen Betrieb mit einer Schaltfrequenz geeignet sind, die größer ist als die Schaltfrequenzen, mit denen die Leistungshalbleiter (41) der übrigen Submodule (20) des mindestens einen Stromrichterventils (11a, 11b) betreibbar sind.

## Beschreibung

Die Erfindung betrifft eine Stromrichterschaltung aufweisend
- einen Gleichspannungsanschluss,
- mindestens einen wechselspannungsseitigen Anschluss und
- mindestens ein Phasenmodul,
wobei das Phasenmodul eine Reihenschaltung von einem oberen und einem unteren Stromrichterventil aufweist,
wobei eine elektrische Verbindung zwischen dem oberen und dem unteren Stromrichterventil den wechselspannungsseitigen Anschluss darstellt,
wobei Anschlüsse des Phasenmoduls mit dem Gleichspannungsanschluss elektrisch verbunden sind,
wobei das obere und das untere Stromrichterventil jeweils wenigstens zwei Submodule aufweisen, die elektrisch in Reihe angeordnet sind,
wobei die Submodule mindestens einen Kondensator und mindestens einen Leistungshalbleiter aufweisen

Stromrichter werden dazu verwendet, elektrische Leistung bezüglich Spannungshöhe, Stromhöhe, Frequenz und Phasenlage umzuwandeln. Stromrichter für die Umwandlung von Wechselspannung in Gleichspannung bzw. von Wechselstrom in Gleichstrom werden als Gleichrichter bezeichnet. Demgegenüber bezeichnet man Stromrichter für die Umwandlung von Gleichspannung in Wechselspannung bzw. von Gleichstrom in Wechselstrom als Wechselrichter. Stromrichter für die Umwandlung von Leistungen mit Spannungen/Strömen einer Frequenz in eine andere Frequenz werden als (Frequenz-)Umrichter bezeichnet.

Stromrichter werden eingesetzt, um elektrische Maschinen und Motoren gezielt mit elektrischer Energie zu versorgen. Dadurch sind diese elektrische Maschinen und Motoren durch die Stromrichter steuerbar und regelbar. Ein weiteres Anwendungsgebiet ist die Steuerung von Energieflüssen, die Kompensation von Oberschwingungen und das Bereitstellen von Blindleistung in Energieversorgungsnetzen. Darüber hinaus sind Stromrichter an der verlustarmen Übertragung von Energie mittels Hochspannungsgleichstromübertragung (HGÜ) beteiligt.

Für diese Anwendungsgebiete der Energiewandlung steht in der Leistungselektronik eine Vielzahl unterschiedlicher Schaltungstopologien zur Verfügung. In der übergeordneten Kategorie der Spannungszwischenkreisumrichter bietet insbesondere die Gruppe der Multi-Level-Topologien den Vorteil hoher Spannungsqualität bei geringem Filteraufwand. Verbreitete Beispiele für solche Topologien sind der 3-Level Neutral-Point-Clamped-Umrichter (3LNPC) oder der 4-Level Flying-Capacitor (4L-FC).

Eine Alternative innerhalb der Multilevel-Topologien bilden die schaltzellenbasierte Stromrichter. Hier sind zwei Hauptvarianten zu unterscheiden. Zur ersten Variante zählt die Series-Connected-H-Bridge-Topologie (Vollbrücken-Topologie). Diese umfasst in Reihe geschaltete H-Brücken, auch als Vollbrücken bezeichnet, deren jeweiliger Zwischenkreis aus einer galvanisch getrennten Quelle gespeist wird. Diese Ketten aus reihengeschalteten Zellen bilden in Ihrer Summe in Stufen steuerbare Spannungsquellen, wobei die Stufenhöhe den Zellspannungen entspricht. Nachteilig ist hierbei die Notwendigkeit, vieler galvanisch getrennter DC-Spannungsquellen.

Die zweite Variante bilden modulare Multilevel-Umrichter, die bereits aus der DE 101 03 031 A1 bekannt sind. Diese weisen ebenfalls in Reihe geschaltete Submodule auf, die jeweils einen Zwischenkreiskondensator ohne zusätzliche Energieeinspeisung besitzen. Diese reihengeschalteten Submodule bilden in Summe ebenfalls eine gesteuerte Spannungsquelle. Durch eine geeignete Ansteuerungsmethodik der Submodule wird der Kondensator über eine Wechselspannungsperiode gleichmäßig ge- und entladen, so dass im Mittel über eine Periode die Spannung im Kondensator konstant bleibt.

In Ihrer Grundform weisen die Submodule einen Kondensator in Verbindung mit einer Halbbrücke mit zwei Leistungstransistoren und einer antiparalleler Diode auf. Diese Topologie wird insbesondere im Mittel- bis Höchstspannungsbereich eingesetzt wie beispielsweise der Hochspannungsgleichstromübertragung (HGÜ). Alternativ bestehen Anwendungen, in denen die Submodule anstelle der Halbbrücke eine Vollbrücke, die auch als H-Brücke bezeichnet wird, aufweisen. Entsprechende Anwendungen sind sowohl aus dem Patent EP 1 497 911 B1 als auch aus der Veröffentlichung "Prospects of the new SVC with Modular Multilevel Voltage Source Converter", M. Pereira, M. Pieschel, R. Stoeber; CIGRE Colloquium, October 2011, Brisbane, bekannt.

Im Vergleich zu 2-Punkt- oder 3-Punkt-Stromrichtern ermöglichen die oben erwähnten modularen Stromrichter die Generierung einer Ausgangsspannung, die auch ohne oder mit geringem Filteraufwand bereits einen geringen Oberschwingungsanteil aufweist.

Bei der Beschreibung der wechselspannungsseitigen Ausgangsspannung von Stromrichtern unterscheidet man zwischen einer verketteten Spannung, die zwischen den einzelnen wechselspannungsseitigen Ausgängen des Stromrichters anliegt, einer Spannung zwischen einem Ausgang und einem Bezugspotential, auch als Leiterspannung bezeichnet und einem Nullsystem. Das Nullsystem wird gebildet, indem die Leiterspannungen addiert werden und durch die Anzahl der Leiter geteilt wird. Die Spannung des Nullsystems hat dabei keinen Einfluss auf die verkettete Spannung.

Der Erfindung liegt die Aufgabe zugrunde, einen kostengünstigen und zuverlässigen modularen Multilevel-Stromrichter anzugeben, der eine wechselspannungsseitige Ausgangsspannung zur Verfügung stellen kann, dessen Oberschwingungsanteil möglichst gering ist.

Diese Aufgabe wird durch eine modulare Stromrichterschaltung dadurch gelöst, dass mindestens ein Stromrichterventil mindestens ein schnellschaltendes Submodul aufweist, wobei die Leistungshalbleiter des schnellschaltenden Submoduls für einen Betrieb mit einer Schaltfrequenz geeignet sind, die größer ist als die Schaltfrequenzen, mit denen die Leistungshalbleiter der übrigen Submodule des mindestens einen Stromrichterventils betreibbar sind. Die Aufgabe wird weiter durch ein Verfahren zum Betrieb einer Stromrichterschaltung dadurch gelöst, dass in mindestens einem Stromrichterventil die Leistungshalbleiter mindestens eines Submoduls mit einer höheren Schaltfrequenz als die Leistungshalbleiter der übrigen Submodule des mindestens einen Stromrichterventils angesteuert werden.

Der Erfindung liegt die Erkenntnis zugrunde, dass sich die Oberschwingungen in der wechselspannungsseitigen Ausgangsspannung dadurch reduzieren lassen, dass mindestens ein Submodul für einen Betrieb mit einer Schaltfrequenz geeignet ist, die größer ist als die Schaltfrequenz, mit der die übrigen Submodule betreibbar sind. Durch die höhere Schaltfrequenz kann die Ausgangsspannung genauer einen Sinusverlauf nachbilden. Dies äußert sich darin, dass der Oberschwingungsgehalt der Ausgangsspannungen gering ist. Wenn eine Filterschaltung zur Optimierung der Ausgangsspannung verwendet wird, kann diese besonders kostengünstig und aufwandsarm realisiert werden. Im Gegensatz zur Verwendung von Submodulen, die alle mit einer höheren Schaltfrequenz betreibbar sind, ist die Verwendung von nur mindestens einem schnellschaltenden Submodul weitaus kostengünstiger realisierbar. Die Qualität der Ausgangsspannung im Hinblick auf vorhandene Oberschwingungen kann dadurch dennoch deutlich verbessert werden.

Eine Möglichkeit zur Realisierung eines schnellschaltenden Submoduls besteht darin, für dieses Submodul Halbleiter mit geringeren Schaltverlusten zu verwenden. Diese Halbleiter sind in der Herstellung auf höhere Schaltfrequenzen optimiert. Ein eventuell vorhandenes schlechteres Durchlassverhalten kann dabei in Kauf genommen worden, ohne die Eigenschaften des Stromrichters wesentlich zu verschlechtern.

Durch das Einfügen des schnellschaltenden Submoduls hat die Ausgangsspannung Oberschwingungen mit höheren Frequenzen als ein Stromrichter, der kein schnellschaltendes Submodul verwendet. Die Oberschwingungen mit höheren Frequenzen können jedoch einfacher mit Hilfe von kleinen Filterschaltungen beseitigt oder zumindest reduziert werden. Dabei ist es unerheblich an welcher Position der Reihenschaltung der Submodule eines Phasenmoduls oder eines Stromrichterventils das schnellschaltende Submodul eingefügt wird.

Bei einer weiteren vorteilhaften Ausgestaltungsform weist jedes Phasenmodul mindestens ein schnellschaltendes Submodul auf. Der Vorteil dieser Ausführungsform besteht darin, dass sich die Ausgangsspannung aller wechselspannungsseitigen Anschlüsse in Bezug auf die Qualität der Ausgangsspannung symmetrisch verhält. Das bedeutet, dass der Anteil an Oberschwingungen in der Ausgangsspannung aller wechselspannungsseitigen Anschlüsse in einer vergleichbaren Größenordnung liegt. Der Stromrichter verhält sich damit bezüglich seiner einzelnen Phasen symmetrisch. Dies ist insbesondere vorteilhaft, wenn mit dem Stromrichter eine symmetrische Last, wie beispielsweise ein Motor, gespeist wird.

Bei einer weiteren vorteilhaften Ausgestaltungsform weist jedes obere und jedes untere Stromrichterventil mindestens ein schnellschaltendes Submodul auf. Der Vorteil dieser Anordnung besteht darin, eine Symmetrie zwischen positiven und negativen Potential des Zwischenkreises herzustellen. Dieses ermöglicht eine einfachere Regelung von Kreisströmen, die zur Symmetrierung der Kondensatorspannungen der einzelnen Submodule genutzt werden kann. Darüber hinaus ist ein Nullsystem der wechselspannungsseitigen Ausgangsspannung durch diese Anordnung leichter beeinflussbar. Dadurch können negative Auswirkungen, wie z.B. Lagerströme, vermieden oder zumindest reduziert werden.

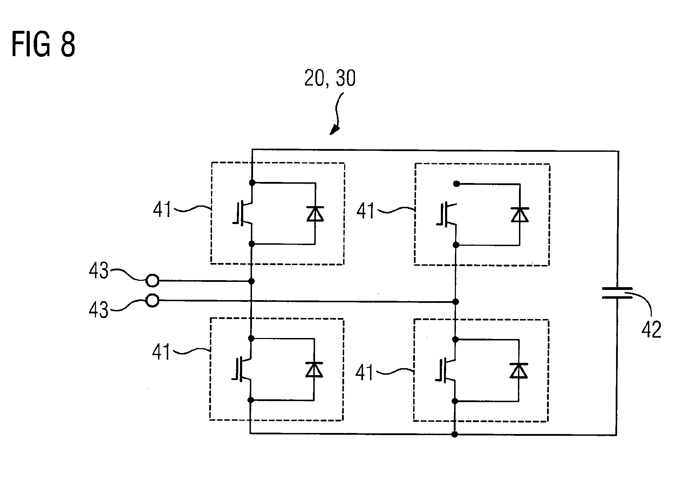

In einer weiteren vorteilhaften Ausgestaltungsform ist das schnellschaltende Modul derart ausgebildet, dass an seinen Anschlussklemmen mindestens drei Spannungslevel verfügbar sind. Durch diese drei Spannungslevel, zwischen denen aufgrund der hohen Schaltfrequenz schnell umgeschaltet werden kann, ist es möglich, am Ausgang des Stromrichters einen Sinusverlauf bereitzustellen. Dabei auftretende Oberschwingungen werden mit Hilfe dieses schnellschaltenden Submoduls vermieden. Ein Submodul das drei Spannungslevel zur Verfügung stellen kann, ist dadurch erzeugbar, dass man zwei Submodule die jeweils zwei Spannungslevel erzeugen können, auf der Gleichspannungsseitige in Reihe schaltet und jeweils eine Anschlussklemme der Submodule miteinander verbindet. An der verbleibenden Anschlussklemme der beiden Submodule sind dann drei Spannungslevel erzeugbar. Ein Vorteil dieser Ausgestaltungsform liegt darin, dass dieses schnellschaltende Submodul vom Aufbau her den übrigen Submodulen ähnlich ausgeführt werden kann somit einfach herstellbar ist. Alternativ ist es möglich, ein schnellschaltendes Submodul mit drei Spannungslevel aus einer Vollbrückenschaltung von Leistungshalbleitern und einem Kondensator zu bilden. Nähere Erläuterungen zu diesem Aufbau werden in der Beschreibung zu FIG 8 geliefert. Der Vorteil dieser Ausführungsform besteht insbesondere darin, die Eigenschaften des schnellen Schaltens nicht nur für zwei sondern für drei Spannungslevel nutzbar zu machen. Dadurch ist eine weitere Erhöhung der Spannungsqualität durch Verringerung der Oberschwingungen am Spannungsausgang des Stromrichters erreichbar.

Bei einer weiteren vorteilhaften Ausgestaltungsform ist das schnellschaltende Submodul derart ausgebildet, dass an seinen Anschlussklemmen Spannungen mit unterschiedlicher Polarität verfügbar sind. Ein derartiges schnellschaltendes Submodul ist mit Hilfe einer Vollbrückenschaltung erreichbar. Zum Aufbau wird auch hier auf die Beschreibung zur FIG 8 verwiesen. Auch mit diesem Aufbau, der beispielsweise durch Verwendung einer Vollbrücke eines Zwei-Punkt-Stromrichters realisierbar ist, kann die Ausgangsspannung eine Sinusform hinreichend genau nachbilden.

Bei einer weiteren vorteilhaften Ausgestaltungsform sind die Leistungshalbleiter des schnellschaltenden Submoduls in einer Vollbrückenschaltung angeordnet. Mit Hilfe dieser Standardanordnung ist auf besonders einfache Weise ein schnellschaltendes Modul mit drei Spannungslevel, die über unterschiedliche Polarität verfügen, mittels einer Standardschaltung von Leistungshalbleitern realisierbar. Aufgrund dieses Standards sind diese Module kostengünstig am Markt verfügbar und erlauben einen kostengünstigen Aufbau der erfindungsgemäßen Stromrichterschaltung.

Bei einer weiteren vorteilhaften Ausgestaltungsform weisen das schnellschaltende Submodul und die übrigen Submodule Leistungshalbleiter mit gleicher Spannungssperrfähigkeit auf. Dieses Submodul ist besonders einfach herstellbar. Aufgrund der gleichen Spannungssperrfähigkeit können in allen Submodulen die gleichen Kondensatoren verwendet werden. Diese Eigenschaft erhöht die Anzahl der Gleichteile im Stromrichter, so dass dieser einfach und kostengünstig herstellbar ist. Darüber hinaus können Regelungsverfahren für modulare Multilevel-Stromrichter genutzt werden, die dann Anwendung finden, wenn alle Submodule gleich ausgebildet sind. Spezielle Verfahren zur Symmetrierung von unterschiedlichen Spannungen in verschiedenen Submodulen können vermieden werden. Der Regelung stehen somit Freiheitsgrade zur Verfügung, die einzelnen Submodule anzusteuern. Dieser Freiheitsgrad kann gezielt ausgenutzt werden, um die Lebensdauer der einzelnen Submodule zu erhöhen. Die Symmetrierung der einzelnen Kondensatorspannungen ist damit auch im Hinblick auf den Ausfall eines oder mehrerer Module besonders einfach möglich.

Bei einer weiteren vorteilhaften Ausgestaltungsform weist das schnellschaltende Submodul Leistungshalbleiter auf, die über eine niedrigere Spannungssperrfähigkeit verfügen als die Leistungshalbleiter der übrigen Submodule. Der Vorteil dieser Anordnung besteht darin, dass Leistungshalbleiter mit niedrigerer Spannungssperrfähigkeit einfach für einen Betrieb mit hoher Schaltfrequenz optimiert werden können. Dabei fallen die niedrigere Spannungssperrfähigkeit und damit die niedrigere Spannung am Kondensator des Submoduls nicht negativ für den Betrieb des Stromrichters in Gewicht. Allerdings stehen mit diesem Leistungshalbleiter Elemente für den Aufbau des Submoduls zur Verfügung, die besonders kostengünstig sind. Hiermit ist eine deutlich höhere Schaltfrequenz der Leistungshalbleiter des schnellschaltenden Submoduls erreichbar. Gleichzeitig können für die übrigen Submodule Leistungshalbleiter mit besonders hoher Spannungssperrfähigkeit genutzt werden. Dadurch kann bei vorgegebener Zwischenkreisspannung der Stromrichterschaltung die Anzahl der benötigten Submodule reduziert werden, so dass ein besonders kostengünstiger Stromrichter herstellbar ist. Die unterschiedlichen Betriebsspannungen der einzelnen Submodule aufgrund der Spannungssperrfähigkeit sollten so gewählt werden, die entstehenden Spannungsstufen möglichst zu maximieren. Dadurch können Spannungsverläufe mit vielen Stufen und geringem Oberschwingungsanteil erzeugt werden.

In dieser Ausführungsform schalten Submodule mit hochsperrenden Bauelementen mit sehr geringer Schaltfrequenz während Submodule mit geringerer Betriebsspannung mit jeweils höheren Schaltfrequenzen schalten. Als besonders vorteilhaft hat es sich dabei erwiesen, dass die Submodule mit hoher Sperrspannung als Submodule mit Halbbrücken ausgeführt sind. Dadurch ergibt sich eine bereits sehr gute Spannungsqualität am Stromrichterausgang auch ohne Filteraufwand bei gleichzeitig optimaler Ausnutzung der Halbleiter durch einen Betrieb mit schaltverlustreduzierter Schaltfrequenz. Dies wird dadurch erreicht, dass die Halbleiter mit hoher Sperrspannung mit kleiner Schaltfrequenz betrieben werden. Mit dieser Anordnung wird auch ein Kosten-/Nutzenoptimum durch eine kleinstmögliche Anzahl von Submodulen pro Zweig ohne Einbußen in der Spannungsqualität erreicht. Der damit erzielbare deutliche Vorteil in Bezug auf Kosten und Wirkungsgrad ist für Anwendungen im Bereich niedrigerer und mittlerer Spannung besonders geeignet.

Bei einer weiteren vorteilhaften Ausgestaltungsform weist ein Stromrichterventil mindestens zwei Submodule auf, deren Leistungshalbleiter sich in der maximal zulässigen Schaltfrequenz unterscheiden. Hintergrund dieser Ausführungsform ist es, Submodule mit unterschiedlichem Schaltverhalten in der erfindungsgemäßen Stromrichterschaltung zu integrieren. Dabei weisen die Submodule jeweils unterschiedliche zulässige Schaltfrequenzen auf. Durch diese Anordnung kann bei leicht höheren Kosten eine weitere Steigerung der Qualität der Ausgangsspannung des Stromrichters erfolgen. Gerade bei Anwendungen die eine besondere hohe Anforderung an die Spannungsqualität des Stromrichterausgangs haben, kann dieser Aufbau auch ohne Filterschaltung eine hinreichende Spannungsqualität zur Verfügung stellen. Oberschwingungen können durch diese Anordnung hinreichend gut vermieden werden. Noch auftretende Oberschwingungen haben eine so hohe Frequenz, dass diese über einfache Filterschaltungen beseitigt oder zumindest reduziert werden können.

Im Folgenden wird die Erfindung anhand der in den Figuren dargestellten Ausführungsbeispiele näher beschrieben und erläutert. Es zeigen:
- FIG 1 bis 5: Ausführungsbeispiele eines modularen Multilevelstromrichters (M2C) mit jeweils mindestens einem schnellschaltenden Submodul,
- FIG 6: den Aufbau eines Submoduls
- FIG 7: den Aufbau eines Submoduls mit drei Spannungsleveln an seinen Anschlussklemmen und
- FIG 8: den Aufbau eines Submoduls mit Vollbrückenschaltung.

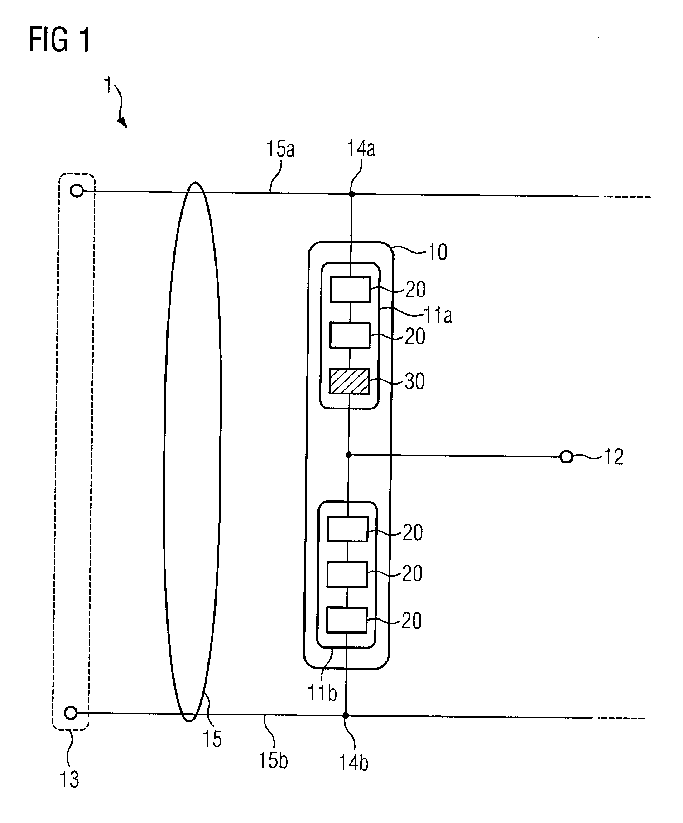

FIG 1 zeigt den Aufbau einer Stromrichterschaltung 1 eines modularen Multilevelstromrichters (M2C). Dieser ist in diesem Ausführungsbeispiel mit einem wechselspannungsseitigen Anschluss 12 ausgeführt. Auf der Gleichspannungsseite weist diese Stromrichterschaltung 1 einen Gleichspannungsanschluss 13 auf. Der Gleichspannungsanschluss 13 umfasst einen positiven und einen negativen Anschluss. Das Phasenmodul 10 ist mit seinen Anschlusspunkten 14a, 14b mit dem Zwischenkreis 15 verbunden. Der Zwischenkreis 15 weist eine Stromschiene mit positiven Potential 15a und eine Stromschiene mit negativen Potential 15b auf. Das Phasenmodul 10 umfasst eine Reihenschaltung aus einem oberen Stromrichterventil 11a und einem unteren Stromrichterventil 11b. Die einzelnen Stromrichterventile 11a und 11b weisen eine Reihenschaltung von Submodulen 20,30 auf. Der Verbindungspunkt zwischen dem oberen Stromrichterventil 11a und dem unteren Stromrichterventil 11b stellt den wechselseitigen Anschluss 12 dar. Das Phasenmodul 10 weist in diesem Ausführungsbeispiel ein schnellschaltendes Submodul 30 auf. Mit diesem ist es möglich, die am wechselspannungsseitigen Anschluss 12 anliegende Spannung gegenüber einem Bezugspotential in ihrer Qualität derart zu optimieren, dass der Oberschwingungsgehalt dieser Spannung gering ist.

Bei einer Vielzahl von Anwendungen kann daher auf den Einsatz eines Filters zur Reduktion von Oberschwingungen verzichtet werden. Es hat sich für die Regelung von Strömen als positiv erwiesen, wenn zwischen wechselspannungsseitigem Anschluss 12 und der Stromschiene mit positiven Potential 15a wie auch zwischen wechselspannungsseitigem Anschluss 12 und Stromschiene mit negativen Potential 15b jeweils Induktivitäten angeordnet werden. Diese sind in der FIG 1 nicht dargestellt.

Ihre Aufgabe ist es, die Regelbarkeit von Strömen des modularen Multilevelstromrichters zu verbessern. Die in FIG 1 dargestellte Stromrichterschaltung 1 kann durch die Parallelschaltung weiterer Phasenmodule 10 zu dem bereits vorhandenen Phasenmodul 10 um weitere wechselspannungsseitige Anschlüsse 12 erweitert werden.

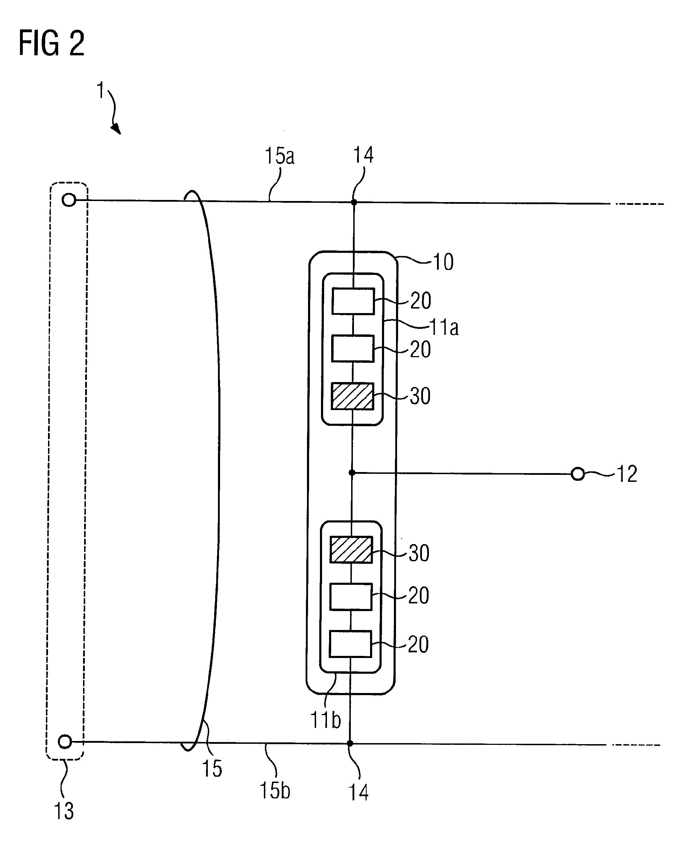

FIG 2 zeigt ein weiteres Ausführungsbeispiel einer Stromrichterschaltung 1 dessen Phasenmodul 10 zwei schnellschaltende Submodule 30 aufweist. Die schnellschaltenden Submodule 30 sind jeweils in einem oberen Stromrichterventil 11a und in einem unteren Stromrichterventil 11b angeordnet. Zur Vermeidung von Wiederholungen bezüglich übereinstimmender Bestandteile der Stromrichterschaltung 1 wird auf die Beschreibung zu der FIG 1 sowie auf die dort eingeführten Bezugszeichen verwiesen. Auch hier ist es für den Betrieb der Stromrichterschaltung 1 unerheblich, an welcher Position der Reihenschaltung der Submodule 20, 30 sich das schnellschaltende Submodul 30 innerhalb des Stromrichterventils 11a, 11b befindet. Dadurch, dass jedes der beiden Stromrichterventile 11a, 11b ein schnellschaltendes Submodul 30 aufweist, kann die Spannung am wechselspannungsseitigen Anschluss 12 mit einem deutlich geringeren Oberschwingungsanteil realisiert werden. Auf eine Filterschaltung zur Beseitigung bzw. Reduktion der vorhandenen Oberschwingungen kann bei diesem Aufbau verzichtet werden. Auch hier ist es wieder möglich, durch Einfügen weiterer paralleler Phasenmodule 10 die zum bereits vorhandenen Phasenmodul 10 parallel angeordnet sind, die Anzahl der wechselspannungsseitigen Anschlüsse 12 zu vergrößern.

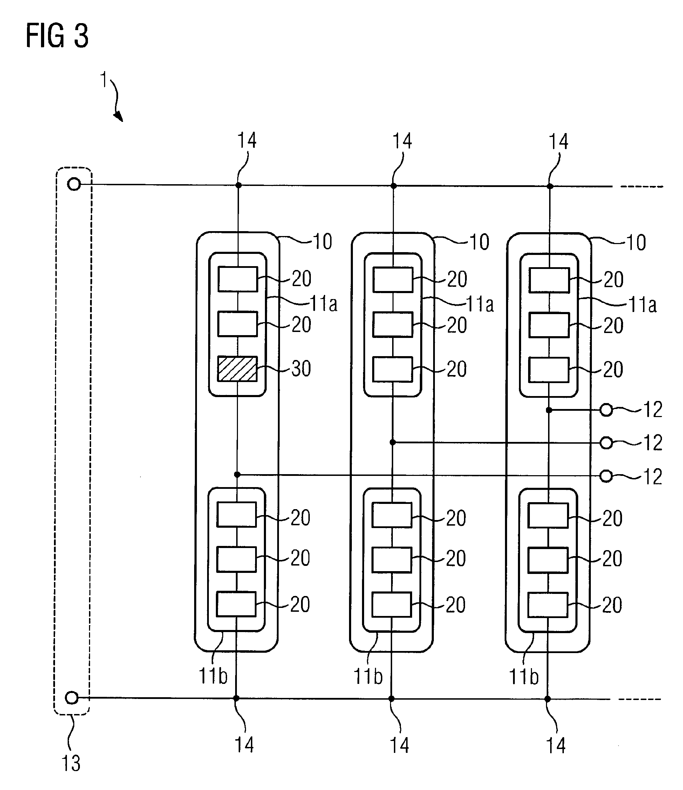

FIG 3 zeigt eine Stromrichterschaltung mit drei wechselspannungsseitigen Anschlüssen 12, die zur Verbindung mit einem dreiphasigen Netz oder Verbraucher geeignet sind. Zur Vermeidung von Wiederholungen bezüglich übereinstimmender Bestandteile der Stromrichterschaltung 1 wird auf die Beschreibung zu den Figuren 1 und 2 sowie auf die dort eingeführten Bezugszeichen verwiesen. Diese Stromrichterschaltung 1 weist genau ein schnellschaltendes Submodul 30 in einem der Phasenmodule 10 auf. Dabei ist es auch hier unerheblich, an welcher Position sich das schnellschaltende Submodul 30 innerhalb der Reihenschaltung von Submodulen 20, 30 des Stromrichterventils 11a, 11b befindet. Mit diesem schnellschaltenden Submodul 30 kann nicht nur die Spannung des diesem Phasenmoduls 10 zugeordneten wechselspannungsseitigen Anschluss 12 in Bezug auf die Spannungsqualität optimiert werden, sondern auch die Spannung an den anderen wechselspannungsseitigen Anschlüssen 12, dessen Phasenmodule 10 keine schnellschaltenden Submodule 30 aufweisen. Dies geschieht dadurch, dass sich die Spannung des schnellschaltenden Submoduls 30 über ein Nullsystem auch auf die Spannung der übrigen wechselspannungsseitigen Anschlüsse 12 auswirkt. Mit diesem Ausführungsbeispiel wird eine kostengünstige Möglichkeit geschaffen, mit nur einem schnellschaltenden Submodul 30 innerhalb einer Stromrichterschaltung 1, die drei Spannungen der wechselspannungsseitigen Anschlüsse 12 in Bezug auf Oberschwindungsgehalt zu optimieren.

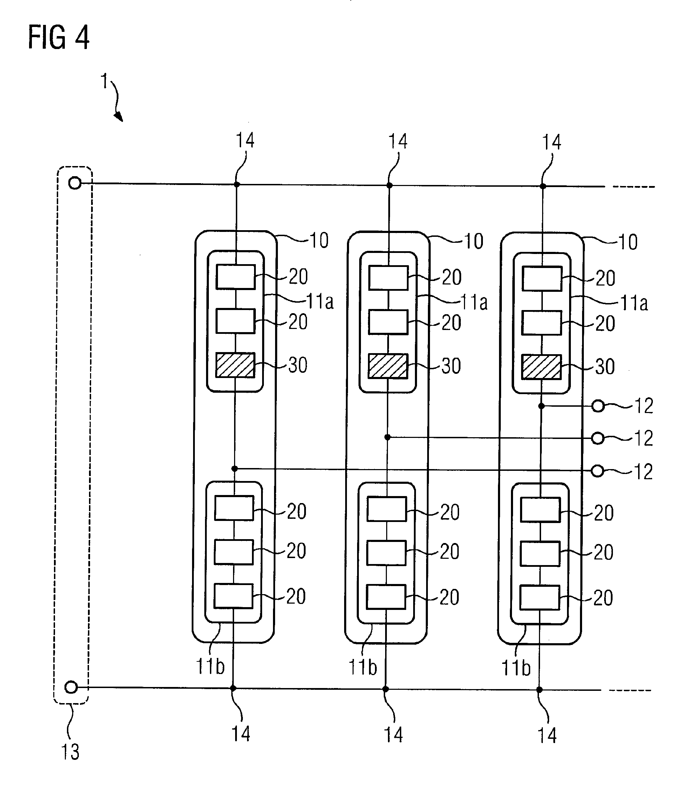

FIG 4 zeigt ein Ausführungsbeispiel einer Stromrichterschaltung 1 bei der jedes Phasenmodul 10 schnellschaltendes Submodul 30 aufweist. Zur Vermeidung von Wiederholungen bezüglich übereinstimmender Bestandteile des Systems wird auf die Beschreibung zu den Figuren 1 bis 3 sowie auf die dort eingeführten Bezugszeichen verwiesen. Bei dem in FIG 4 dargestellten Ausführungsbeispiel sind die schnellschaltenden Submodule 30 jeweils in den oberen Stromrichterventilen 11a angeordnet. Ebenso ist eine Anordnung der schnellschaltenden Submodule 30 in den unteren Stromrichterventilen 11b möglich. Darüber hinaus ist es auch möglich, dass eine Stromrichterschaltung 1 in einem oder mehreren Phasenmodulen 10 das schnellschaltende Submodul 30 im oberen Stromrichterventil 11a angeordnet hat und in anderen Phasenmodulen 10 das schnellschaltende Submodul 30 in den unteren Stromrichterventilen 11b vorhanden ist. Mit diesem Aufbau ist es möglich, auch ohne ein Nullsystem an der Ausgangsspannung auf die Optimierung der Spannungsform direkt einzuwirken. Ein Nullsystem ist dafür nicht erforderlich. Insbesondere für den Fall, dass ein über die wechselspannungsseitigen Anschlüsse 12 gespeister Verbraucher auch einen Anschluss für eine Betriebserde aufweist, kann die Spannung der wechselspannungsseitigen Anschlüsse und dem Bezugspotential der Bezugserde mit dieser Schaltung beeinflusst werden. In diesem Fall liegt dann am Verbraucher nicht nur die verkettete Spannung der wechselspannungsseitigen Anschlüsse 12 an, sondern darüber hinaus auch das Nullsystem. Aufgrund der symmetrischen Ausgestaltungen der Phasenmodule 10 kann das Nullsystem beliebig vorgegeben werden.

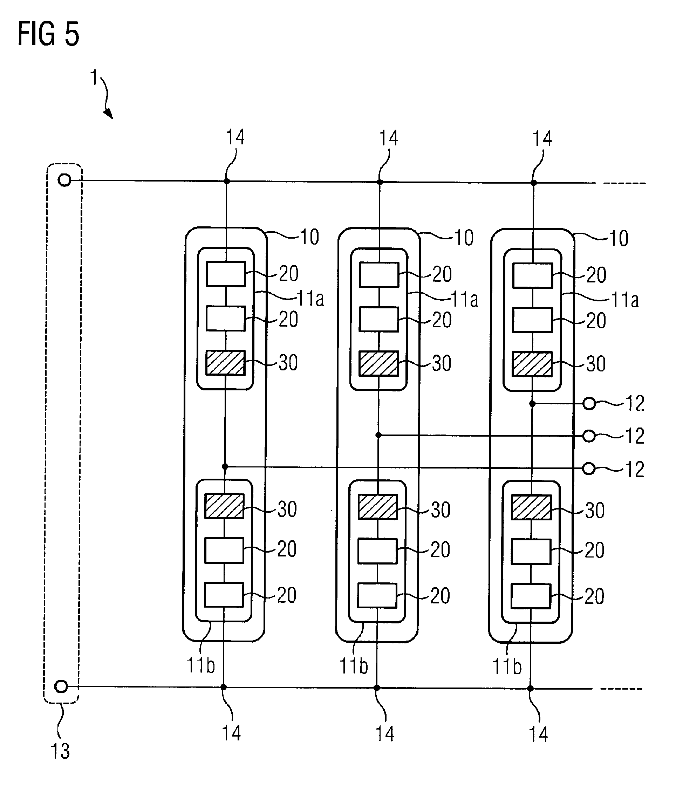

FIG 5 zeigt ein weiteres Ausführungsbeispiel einer Stromrichterschaltung 1, bei der sämtliche oberen und unteren Stromrichterventile ein schnellschaltendes Submodul 30 aufweisen. Auch hierbei kann das schnellschaltende Submodul 30 an beliebiger Stelle innerhalb der Reihenschaltung des Stromrichterventils angeordnet sein. Zur Vermeidung von Wiederholungen bezüglich übereinstimmender Bestandteile des Systems wird auf die Beschreibung zu den Figuren 1 bis 4 sowie auf die dort eingeführten Bezugszeichen verwiesen. Der Vorteil dieses Ausführungsbeispiels besteht darin, dass sich dieser Schaltungsaufbau symmetrisch verhält in Bezug zur Stromschiene mit positiven Potential 15a und zur Stromschiene mit negativen Potential 15b. Mit dieser Anordnung ist es möglich, eine Ausgangsspannung an den wechselspannungsseitigen Anschlüssen 12 zu generieren, dessen Verlauf sowohl für positive Halbwellen als auch für negative Halbwellen symmetrisch ist. Durch das Vorhandensein von jeweils zwei schnellschaltenden Submodulen 30 in jedem Phasenmodul 10 ist darüber hinaus eine Redundanz geschaffen, so dass selbst bei Ausfall eines schnellschaltenden Submoduls 30 pro Phasenmodul 10 noch immer ein Betrieb mit geringen Oberschwingungen im Spannungsverlauf des wechselspannungsseitigen Anschlusses 12 realisiert werden kann.

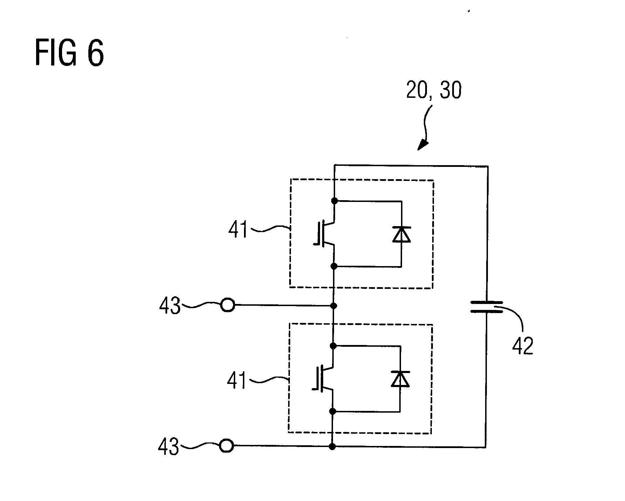

FIG 6 zeigt den Aufbau eines Submoduls 20, 30 mit einer Halbbrückenschaltung. Die Halbbrückenschaltung weist eine Reihenschaltung zweier Leistungshalbleiter 41 auf. Die Leistungshalbleiter 41 umfassen wiederum eine Parallelschaltung eines abschaltbaren Leistungshalbleiterschalters und einer dazu antiparallel geschalteten Diode. Parallel zu der Reihenschaltung der beiden Leistungshalbleiter 41 ist ein Kondensator 42 angeordnet. An den Anschlussklemmen 43 des Submoduls 20, 30 kann je nach Schaltzustand der Leistungshalbleiter 41 die Spannung 0 oder die Spannung am Kondensator 42 erzeugt werden. Dabei ist eine Anschlussklemme 43 des Submoduls mit dem Verbindungspunkt der beiden in Reihe geschalteten Leistungshalbleiter 41 verbunden. Die zweite Anschlussklemme des Submoduls 20, 30 ist mit einem Anschlusspunkt der Reihenschaltung der beiden Leistungshalbleiter 41 verbunden.

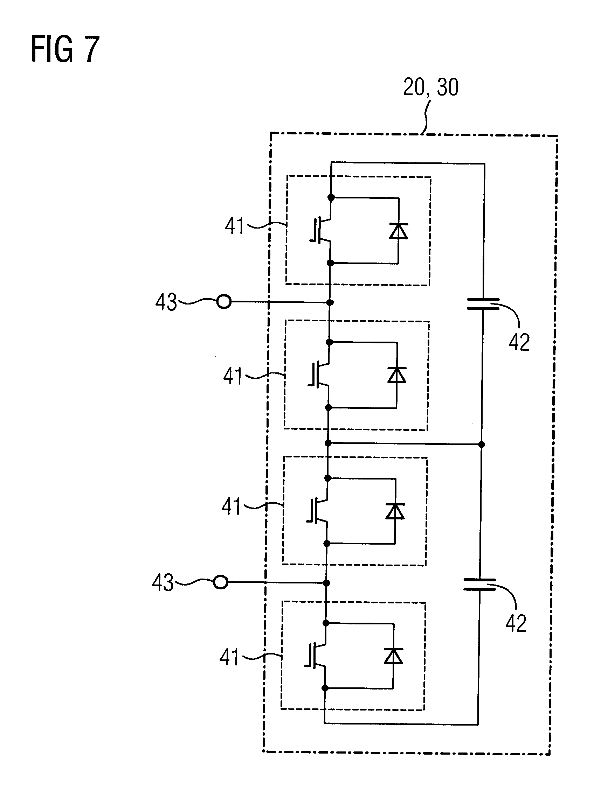

FIG 7 zeigt ein Ausführungsbeispiel für einen Aufbau eines Submoduls 20, 30, bei dem an seinen wechselspannungsseitigen Anschlüssen drei Spannungslevel verfügbar sind. Dazu werden zwei Submodule, wie sie beispielsweise in FIG 6 dargestellt sein geleichspannungsseitig, d.h. am Kondensator 42 in Reihe geschaltet. Somit weist das durch die Reihenschaltung entstehende Submodul 20, 30 dann zwei Kondensatoren 42 und vier Leistungshalbleiter 41 auf. Die Anschlüsse 43 des Submoduls sind mit dem Verbindungspunkten zweier Leistungshalbleiter 41 verbunden, deren Reihenschaltung parallel zu jeweils einem Kondensator 42 angeordnet sind. Der Aufbau dieses Submoduls 20, 30 mit drei Spannungsleveln an seinen Anschlüssen lässt sich somit aus den gleichen Komponenten aufbauen wie die übrigen Submodule 20, 30. Daher ist dieser Aufbau besonders einfach und kostengünstig realisierbar.

Das Ausführungsbeispiel der FIG 8 zeigt ein Submodul 20, 30 bei dem an den Anschlussklemmen 43 des Submoduls 20, 30 Spannung unterschiedlicher Polarität erzeugt werden können. Dazu verwendet das hier dargestellte Submodul 20, 30 eine Vollbrückenschaltung die parallel zum Kondensator 42 angeordnet ist. Die Vollbrückenschaltung umfasst vier Leistungshalbleiter 41. Zwei der Leistungshalbleiter 41 sind dabei jeweils in Reihe geschaltet. Die beiden Reihenschaltungen wiederum sind jeweils parallel zum Kondensator 42 angeordnet. Die Anschlussklemmen 43 des Submoduls 20, 30 sind jeweils mit dem Verbindungspunkt der beiden in Reihe geschalteten Leistungshalbleiter 41 verbunden. Der Aufbau des Leistungshalbleiters 41 entspricht dabei dem wie er auch im Submodul der FIG 6 beschrieben ist. Das Submodul mit Vollbrückenschaltung ist geeignet, drei Spannungslevel zur Verfügung zu stellen. Bei den drei Spannungsleveln handelt es sich um die positive Spannung am Kondensator 42, die negative Spannung am Kondensator 42 und eine Spannung 0.

Obwohl die Erfindung im Detail durch die bevorzugten Ausführungsbeispiele näher illustriert und beschrieben wurde, so ist die Erfindung nicht allein durch die offenbarten Beispiele eingeschränkt und andere Varianten können vom Fachmann hieraus abgeleitet werden, ohne den Schutzumfang der Erfindung zu verlassen.

## Patentansprüche

1. Stromrichterschaltung (1) aufweisend
- einen Gleichspannungsanschluss (13),
- mindestens einen wechselspannungsseitigen Anschluss (12) und
- mindestens ein Phasenmodul (10),
wobei das Phasenmodul (10) eine Reihenschaltung von einem oberen und einem unteren Stromrichterventil (11a, 11b) aufweist,
wobei eine elektrische Verbindung zwischen dem oberen und dem unteren Stromrichterventil (11a, 11b) den wechselspannungsseitigen Anschluss (12) darstellt,
wobei Anschlüsse (14a, 14b) des Phasenmoduls (10) mit dem Gleichspannungsanschluss (13) elektrisch verbunden sind, wobei das obere und das untere Stromrichterventil (11a, 11b) jeweils wenigstens zwei Submodule (20, 30) aufweisen, die elektrisch in Reihe angeordnet sind,
wobei die Submodule (20, 30) mindestens einen Kondensator (42) und mindestens einen Leistungshalbleiter (41) aufweisen, wobei mindestens ein Stromrichterventil (11a, 11b) mindestens ein schnellschaltendes Submodul (30) aufweist,
wobei die Leistungshalbleiter (41) des schnellschaltenden Submoduls (30) für einen Betrieb mit einer Schaltfrequenz geeignet sind, die größer ist als die Schaltfrequenzen, mit denen die Leistungshalbleiter (41) der übrigen Submodule (20) des mindestens einen Stromrichterventils (11a, 11b) betreibbar sind.

2. Stromrichterschaltung (1) nach Anspruch 1, **dadurch gekennzeichnet, dass** jedes Phasenmodul (10) mindestens ein schnellschaltendes Submodul (30) aufweist.

3. Stromrichterschaltung (1) nach Anspruch 1 oder 2, **dadurch gekennzeichnet , dass** jedes obere und jedes untere Stromrichterventil (11a, 11b) mindestens ein schnellschaltendes Submodul (30) aufweisen.

4. Stromrichterschaltung (1) nach einem der Ansprüche 1 bis 3, **dadurch gekennzeichnet, dass** das schnellschaltende Submodul (30) derart ausgebildet ist, dass an seinen Anschlussklemmen (43) mindestens drei Spannungslevel verfügbar sind.

5. Stromrichterschaltung (1) nach einem der Ansprüche 1 bis 4, **dadurch gekennzeichnet, dass** das schnellschaltende Submodul (30) derart ausgebildet ist, dass an seinen Anschlussklemmen (43) Spannungen mit unterschiedlicher Polarität verfügbar sind.

6. Stromrichterschaltung (1) nach einem der Ansprüche 1 bis 5, **dadurch gekennzeichnet, dass** die Leistungshalbleiter (41) des schnellschaltenden Submoduls (30) in einer Vollbrückenschaltung angeordnet sind.

7. Stromrichterschaltung (1) nach einem der Ansprüche 1 bis 6, **dadurch gekennzeichnet, dass** das schnellschaltende Submodul (30) und die übrigen Submodule (20) Leistungshalbleiter (41) mit gleicher Spannungssperrfähigkeit aufweisen.

8. Stromrichterschaltung (1) nach einem der Ansprüche 1 bis 6, **dadurch gekennzeichnet, dass** das schnellschaltende Submodul (30) Leistungshalbleiter (41) aufweist, die über eine niedrigere Spannungssperrfähigkeit verfügen als die Leistungshalbleiter (41) der übrigen Submodule (20).

9. Stromrichterschaltung (1) nach einem der Anspruch 1 bis 8, **dadurch gekennzeichnet, dass** die Leistungshalbleiter (41) unterschiedlicher Submodule (20, 30) eines Stromrichterventils (11a, 11b) jeweils unterschiedliche Spannungssperrfähigkeiten aufweisen.

10. Stromrichterschaltung (1) nach einem der Ansprüche 1 bis 9, **dadurch gekennzeichnet, dass** mindestens ein Stromrichterventil (11a, 11b) mindestens zwei Submodule (20, 30) aufweist, deren Leistungshalbleiter (41) sich in der maximal zulässigen Schaltfrequenz unterscheiden.

11. Verfahren zum Betrieb einer Stromrichterschaltung (1) nach einem der Ansprüche 1 bis 10, **dadurch gekennzeichnet, dass** in mindestens einem Stromrichterventil (11a, 11b) die Leistungshalbleiter (41) mindestens eines Submoduls (30) mit einer höheren Schaltfrequenz als die Leistungshalbleiter (41) der übrigen Submodule (20) des mindestens einen Stromrichterventils (11a, 11b) angesteuert werden.

12. Verfahren nach Anspruch 11, **dadurch gekennzeichnet, dass** in jedem Phasenmodul (10) die Leistungshalbleiter mindestens eines Submoduls (30) mit einer höheren Schaltfrequenz als die Leistungshalbleiter (41) der übrigen Submodule (20) angesteuert werden.

13. Verfahren nach einem der Ansprüche 11 oder 12, **dadurch gekennzeichnet, dass** in jedem oberen und jedem unteren Stromrichterventil (11a, 11b) die Leistungshalbleiter mindestens eines Submoduls (30) mit einer höheren Schaltfrequenz als die Leistungshalbleiter (41) der übrigen Submodule (20) angesteuert werden.

14. Verfahren nach einem der Ansprüche 11 bis 13, **dadurch gekennzeichnet , dass** eine zwischen dem wechselspannungsseitigen Anschluss und einem Bezugspotential anliegende Spannung derart eingestellt wird, dass diese nach einer Mittelwertbildung einem vorgegebenen Sollwert entspricht, wobei die Mittelwertbildung mit einer Zeitkonstante erfolgt , die zwischen der Periodendauer der Schaltfrequenz des schnellschaltenden Submoduls (30) und der Periodendauer der Schaltfrequenz der übrigen Submodule (20) liegt.
